# NEUE EUROPÄISCHE PATENTSCHRIFT

(11) **EP 0 906 856 B2**
(45) Veröffentlichungstag und Bekanntmachung des Hinweises auf die Entscheidung über den Einspruch: **22.08.2007**
(45) Hinweis auf die Patenterteilung: 30.07.2003
(21) Anmeldenummer: 98118564.8
(22) Anmeldetag: 01.10.1998
(51) Int. Cl.: B60T 1/06, F16D 55/224

(54) **Gleitsattel-Scheibenbremse**
Sliding caliper disc brake
Frein à disque à étrier flottant

(30) Priorität: 01.10.1997 DE 19743538
(43) Veröffentlichungstag der Anmeldung: 07.04.1999
(73) Patentinhaber: WABCO Perrot Bremsen GmbH, 68229 Mannheim (DE)
(72) Erfinder: Antony, Paul, 67550 Worms (DE)
(74) Vertreter: Leinweber & Zimmermann

(56) Entgegenhaltungen:
- DE-A- 3 910 969
- DE-A- 4 334 839
- GB-A- 2 014 674
- US-A- 4 319 668
- US-A- 4 418 798
- US-A- 4 440 267
- US-A- 5 103 939
- US-A- 5 297 659
- US-A- 40 406 231
- US-B- 4 560 036
- US-B- 4 596 318
- US-B- 4 609 078

## Beschreibung

Gleitsattel-Scheibenbremse für ein Landfahrzeug, mit einer Bremsscheibe, einem Gleitsattel, einem Träger, einer betätigungsseitigen Bremsbacke und einer reaktionsseitigen Bremsbacke, wobei der Träger unbeweglich bezüglich der Achse des Landfahrzeugs gehalten ist, die Bremsscheibe drehbar bezüglich der Achse gehalten ist und zur Montage/Demontage bezüglich des Trägers in Richtung der Achse verschieblich ist, der Gleitsattel zwei Schenkel hat, nämlich einen, der auf der Betätigungsseite der Bremsscheibe liegt, und einen, der auf der Reaktionsseite der Bremsscheibe liegt, der Träger sich axial von der Betätigungsseite zur Reaktionsseite der Bremsscheibe erstreckt, der Träger auf der Reaktionsseite eine lichte Weite hat, die derart bemessen ist, daß die Bremsscheibe beim Axialverschieben zur Montage/Demontage hindurchpaßt, und der Träger Führungen aufweist, auf denen der Gleitsattel gleitend geführt ist.

Die EP-A1-665 387 zeigt den Aufbau einer Gleitsattel-Scheibenbremse und deren Befestigung an einer Achse 1. Die beiden Sattelschenkel übergreifen U-förmig eine Bremsscheibe 12, um die beidseitig der Bremsscheibe in Führungsschächten eines Gleitsattelträgers 14 gelagerten und abgestützten Bremsbacken 17 gegen die Bremsscheibe zu drücken. Der Gleitsattelträger 14 seinerseits ist an einem an der Achse 1 befestigten Tragflansch 13 verschraubt. Wie insbesondere Fig. 6 der EP-A1-665 387 zu entnehmen ist, ist der Gleitsattelträger zur allflächigen Führung der Bremsbacken geschlossen, d.h. daß er rahmenartig die Bremsscheibe voll umgreift, vgl. auch EP-A1-665 387, Seite 2, Zeilen 55 und 56.

Bei Gleitsattel-Scheibenbremsen dieser Bauart gestaltet sich der Wechsel der Bremsscheibe als sehr umständlich, weil der die Bremsscheibe voll umgreifende Gleitsattelträger ein Entfernen der Bremsscheibe in Richtung der Reaktionsseite der Bremse, die hier die Radfelgenseite ist, nicht ermöglicht. Um dies nach dem Abbau der Radfelge zu realisieren, wird in der EP-A1-665 387 vorgeschlagen, den Gleitsattelträger bis auf eine Befestigungsschraube 15 vom Tragflansch 13 zu lösen und die komplette Bremse über den Scheibenumfang hinaus auszuschwenken.

Nachteilig bei dieser Lösung ist es zum einen, daß mehrere Befestigungsschrauben zu entfernen sind. Ferner liegt der Schwenkpunkt um die genannte Befestigungsschraube über dem Außendurchmesser der Bremsscheibe und weit oberhalb der Rotationskontur des Bremssattels im Bereich der Radfelge. Wenngleich diese Lösung mithin zwar für eine ganz spezielle Achsenkonstruktion mit dem für diese Ausführung zur Verfügung stehenden Einbauraum einsetzbar ist, ist sie jedoch allgemein nicht brauchbar. Denn sowohl die axialen als auch die radialen Platzverhältnisse im Bereich der Radführung mit der Bremsenbefestigung sind im allgemeinen derart beengt, daß entweder die Radfelge selbst oder andere Fahrzeugteile beim Verschwenken an den Tragflansch anschlagen könnten.

Aus der DE-A-40 36 272 ist eine weitere Gleitsattel-Scheibenbremse bekannt. Sie weist einen ebenfalls rahmenartigen Gleitsattelträger auf, der an die Achse angeschweißt ist. Da ein komplettes Ausschwenken der Bremse bei dieser Lösung nicht möglich ist, besteht der Gleitsattelträger aus zwei Teilen, die auf der Betätigungsseite miteinander verschraubt sind. Auch diese Lösung erfordert für einen Wechsel der Bremsscheibe mehrere Arbeitsschritte. Zuerst müssen die Bremsbacken entfernt, der Gleitsattel vom Gleitsattelträger gelöst und das die Bremsscheibe übergreifende Trägerteil von dem an der Achse angeschweißten Trägerteil getrennt werden. Erst danach ist der freie Zugang von der Felgenseite zur Bremsscheibe gegeben.

Bei den beiden oben beschriebenen bekannten Bremsen handelt es sich jeweils um Nutzfahrzeugbremsen, die ein dementsprechend vergleichsweise großes Gewicht haben. Auch haben ihre einzelnen Bauteile ein erhebliches Gewicht, weshalb jeder zusätzliche Arbeitsschritt als nachteilig anzusehen ist.

Aus der DE-C3-28 04 808 ist eine Gleitsattel-Scheibenbremse für PKW bekannt. Dabei umgreift der Gleitsattelträger nicht vollständig als Rahmen die Bremsscheibe. Jedoch hintergreifen zur Belagführung dienende Trägerarme auch soweit die Bremsscheibe, daß diese nur dann zugänglich ist, wenn die komplette Bremse von der Achse abgenommen ist. Bei einem mit der Achse eine integrierte Einheit bildenden Gleitsattelträger ist ein Scheibenwechsel somit überhaupt nicht möglich.

Die DE-A-39 10 969 zeigt ebenfalls eine Gleitsattel-Scheibenbremse für PKW. Auch bei dieser Bremse hintergreifen Arme 36 und 37 die Bremsscheibe. Als weitere Beispiele für Bremsen dieser Art sind zu nennen die US-A-5,297,659, die DE-A-43 34 839 und die US-A-5,103,939.

Die DE-C2-29 19 548 zeigt eine Gleitsattel-Scheibenbremse der eingangs genannten Art. Bei dieser Ausführung weist eine reaktionsseitige Bremsbacke Nuten 33L und 33R auf, in die Führungsleisten 30L und 30R eines Trägers 11 eingreifen. Dadurch ist die reaktionsseitige Bremsbacke in Radialrichtung an dem Träger festgelegt. Soll die Bremsscheibe gewechselt werden, muß nicht nur der Gleitsattel in Radialrichtung abgehoben werden, sondern es muß auch zumindest die reaktionsseitige Bremsbacke in Axialrichtung vom Träger abgezogen werden. Erst dann liegt die Bremsscheibe derart frei, daß sie von der Reaktionsseite her abgezogen werden kann.

Der Erfindung liegt die Aufgabe zugrunde, die Gleitsattel-Scheibenbremse nach der DE-C2-29 19 548 derart weiterzubilden, daß - auch im Hinblick auf die sehr beengten Einbauverhältnisse in Radführungen - der Arbeitsaufwand zum Montieren/Demontieren der Bremsscheibe minimiert wird.

Erfindungsgemäß wird die gestellte Aufgabe durch eine Scheibenbremse nach Ansprüch 1 gelöst.

Mit anderen Worten dient erfindungsgemäß der Gleitsattel und nicht der Träger zur Radialfestlegung der reaktionsseitigen Bremsbacke. Daher sind auch keine eigenen Arbeitsschritte erforderlich, um die reaktionsseitige Bremsbacke zu demontieren. Vielmehr genügt das Abheben des Gleitsattels - und damit der daran festgelegten Bremsbacke - von dem Träger um die Bremsscheibe für die Montage/Demontage von der Reaktionsseite her freizulegen.

Erfindungsgemäß bevorzugt ist vorgesehen, daß der Träger zwei Arme aufweist, die sich axial von der Betätigungsseite zur Reaktionsseite erstrecken und auf ihrer bremsscheibenzugewandten Seite erste Stützflächen zur gleitenden Führung und Abstützung des Gleitsattels aufweisen, und daß der Gleitsattel mit einer Außenkontur an den Stützflächen anliegt. Mithin wirken die beiden Arme des Trägers derart mit dem Gleitsattel zusammen, daß sie die Bremskräfte (zumindest teilweise) aufnehmen können.

Die reaktionsseitige Bremsbacke wird sich beim Bremsen nicht in Axialrichtung bezüglich des Gleitsattels verschieben. Erfindungsgemäß stützt sich die reaktionsseitige Bremsbacke daher erfindungsgemäß bevorzugt in Tangentialrichtung an dem Gleitsattel ab. Durch diese Ausgestaltung wird erreicht, daß der Gleitsattel und die reaktionsseitige Bremsbacke noch weiter zu einer als Ganzes von dem Träger abnehmbaren Baueinheit zusammenwachsen. Darüber hinaus muß beim Einbau der Baueinheit aus reaktionsseitiger Bremsbacke und Gleitsattel nicht darauf geachtet werden, daß die reaktionsseitige Bremsbacke auch korrekt auf einer etwaig an dem Träger vorhandenen Führung sitzt. Vielmehr ist eine solche Führung am Träger im Hinblick auf die Abstützung der reaktionsseitigen Bremsbacke an dem Gleitsattel entbehrlich.

Die reaktionsseitige und die betätigüngseitige Bremsbacke sind einfach in den Ausschnitt "eingesteckt", was ihre Montage/Demontage besonders einfach macht.

Als den Gesamtaufbau weiter vereinfachend wird es erfindungsgemäß bevorzugt, daß Begrenzungen des Ausschnitts als zweite Stützflächen für die reaktionsseitige Bremsbacke dienen. Mit anderen Worten ist der Ausschnitt und damit die Abstützung der reaktionsseitigen Bremsbacke in Radialrichtung offen.

Insbesondere dann, wenn der Ausschnitt auch die betätigungsseitige Bremsbacke aufnimmt, werden auch die dritten Stützflächen eine in Radialrichtung offene Ausgestaltung haben.

Erfindungsgemäß bevorzugt ist eine Halteeinrichtung vorgesehen, die die betätigungsseitige Bremsbacke und die reaktionsseitige Bremsbacke in Radialrichtung an dem Gleitsattel festlegt. Damit muß nur ein Bauteil gelöst werden, um beide Bremsbacken freizugeben.

Erfindungsgemäß bevorzugt weist die Gleitsattel-Scheibenbremse einen Ansatz an dem Gleitsattel oder an dem Träger auf, der eine entsprechende Kontur an dem Träger bzw. an dem Gleitsattel hintergreift und dadurch den Gleitsattel in Radialrichtung an dem Träger verriegelt, wobei die axiale Länge des Ansatzes oder der Kontur derart ist, daß der Gleitsattel durch Axialverschiebung entriegelt werden kann.

Eine solche Verriegelung, die vorteilhafterweise zumindest auf der Bremsscheibeneinlaufseite vorgesehen sein sollte, dient der Führung des Gleitsattels beim Wiederanbau an den Träger. Damit wird - etwa entsprechend einem Bajonettverschluß - eine besonders einfache Möglichkeit der Verriegelung des Gleitsattels an dem Träger erreicht.

Vorteilhafterweise sind die Führungen erfindungsgemäß bevorzugt an dem Ansatz oder der Kontur angeordnet.

Erfindungsgemäß kann der Träger unlösbar mit der Achse verbunden sein. Er kann aber auch lösbar an der Achse angebracht sein.

Im folgenden ist die Erfindung anhand bevorzugter Ausführungsbeispiele unter Bezugnahme die beiliegende Zeichnung mit weiteren Einzelheiten näher erläutert. Dabei zeigen
Fig. 1 eine schematische Darstellung mit Blickrichtung auf die Reaktionsseite der Bremse, die hier die Felgenseite ist,
Fig. 2 eine schematische Darstellung mit Blickrichtung auf die Betätigungsseite der Bremse,
Fig. 3 den Kopplungsbereich zwischen dem Gleitsattel und dem Träger,
Fig. 4 ein weiteres Ausführungsbeispiel, bei dem der Träger an einem Tragflansch der Achse befestigt ist und
Fig. 5 eine Schnittansicht, die die Abstützung Bremsbelag/Sattel/Träger schematisch darstellt.

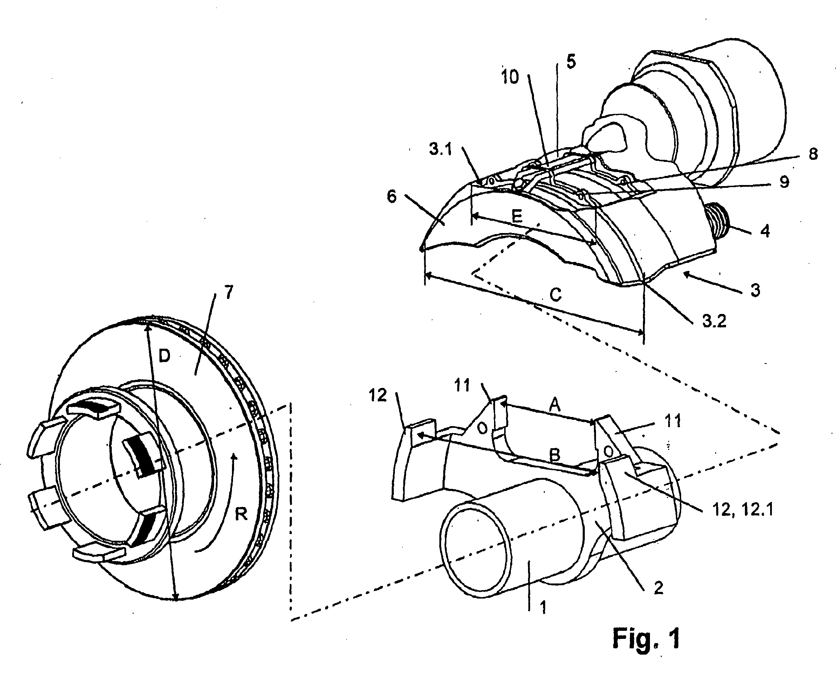

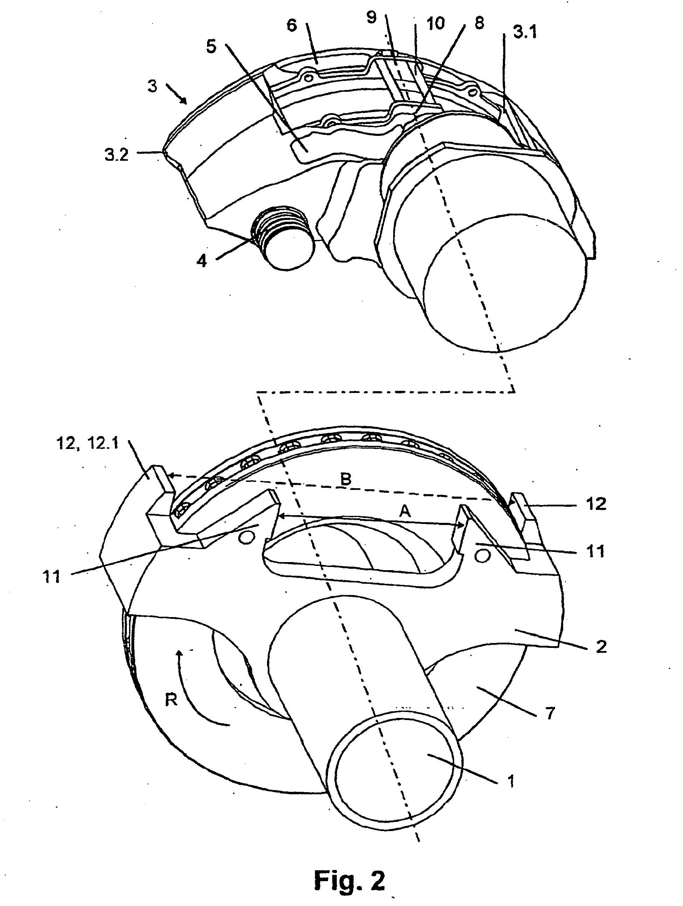

Die Fig. 1 und 2 zeigen eine Achse 1 mit einem daran starr befestigten Träger 2 und einem Gleitsattel 3, zu dessen Axialführung entlang der Bremsenachse am Träger befestigte Führungsbolzen 4 dienen. Der Gleitsattel 3 ist U-förmig ausgebildet, wobei ein betätigungsseitiger Sattelschenkel 5 eine Zuspannung trägt und gegen eine betätigungsseitige Bremsbacke 8 wirkt. Ein reaktionsseitiger Sattelschenkel 6 hingegen, der bei diesem Ausführungsbeispiel in Richtung der Radfelge zeigt, wirkt gegen eine reaktionsseitige Bremsbacke 9 und weist eine Breite C auf. Zwischen den Sattelschenkeln und dem Bremsbacken ist eine Bremsscheibe 7 mit einem Durchmesser D gelagert, deren Drehrichtung R durch einen Pfeil angedeutet ist.

In einem Ausschnitt 3.1 des Gleitsattels 3 sind beide Bremsbacken 8, 9 mittels eines von dem Gleitsattel 3 lösbaren Haltemittels 10 derart gehalten, daß sie zwar in Axialrichtung der Bremsscheibe 7 beweglich, jedoch bezüglich anderer Richtungen von dem genannten Haltemittel 10 festgelegt sind.

Der Träger 2 weist betätigungsseitig zwei sich in Radialrichtung nicht über die Außenkontur der Bremsscheibe 7 hinaus erstreckende Arme mit Stützflächen 11 auf. Der Abstand A der Stützflächen 11 entspricht der Breite der betätigungsseitigen Bremsbacke 8. Die Stützflächen dienen zur seitlichen Abstützung der Bremsbacke 8 und damit zur Einleitung der Bremskräfte in den Träger 2. Reaktionsseitig erstrecken sich in Radialrichtung zwei Arme mit Stützflächen 12. Die beiden Arme sind - in Axialprojektion gesehen - außerhalb der Bremsscheibenkontur angeordnet. Der Abstand B der Stützflächen voneinander entspricht der Breite C des reaktionsseitigen Sattelschenkels 6. Die Stützflächen dienen wiederum der Einleitung von Bremskräften in den Träger 2, die von der reaktionsseitigen Bremsbacke 9 auf den Gleitsattel 3 übertragen werden. Damit die reaktionsseitige Bremsbacke 9 die Bremskräfte auf den Gleitsattel 3 übertragen kann, ist sie seitlich an dem Gleitsattel 3 abgestützt. Dazu dienen Stützflächen 9.1 an der reaktionsseitigen Bremsbacke 9 und Stützflächen 3.3 an dem Gleitsattel 3. Die Stützflächen 3.3 sind von Begrenzungen des Ausschnitts 3.1 gebildet. Aus diesem Grunde hat der Ausschnitt 3.1 eine Breite E, die der Breite der reaktionsseitigen Bremsbacke 9 entspricht.

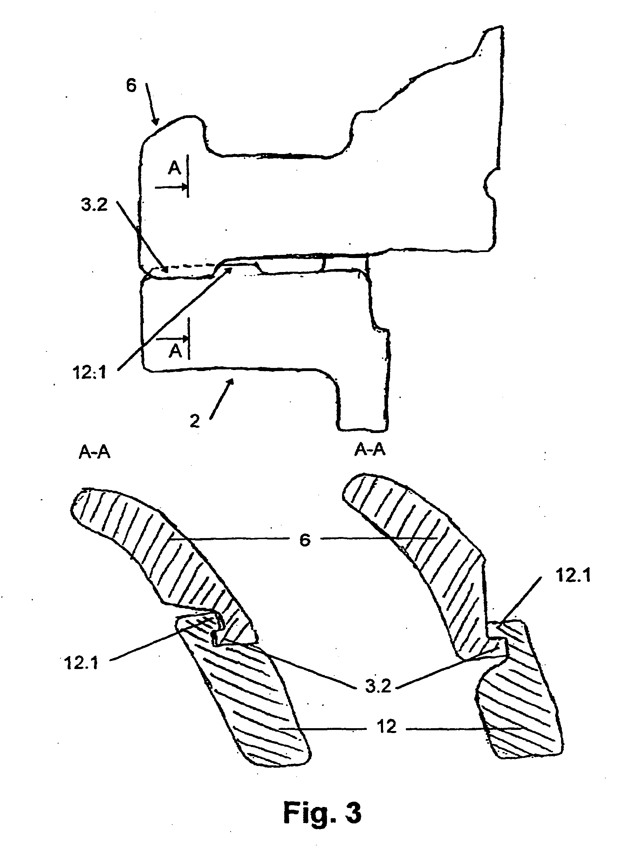

Um den Gleitsattel 3 in Radialrichtung auswärts festzulegen, übergreift gemäß Fig. 3 zumindest auf einer Bremsscheibeneinlaufseite eine Axialführung des Trägers 2 im Bereich der reaktionsseitigen Stützfläche 12.1 einem Bereich 3.2 des reaktionsseitigen Sattelschenkels 6. Die einander übergreifenden Abschnitte des reaktionsseitigen Sattelschenkels 6 einerseits und des Trägers 2 andererseits sind in ihrer axialen Länge derart bemessen, daß der Gleitsattel 3 durch AxialVerschiebung bezüglich des Trägers 2 ver- bzw. entriegelt werden kann.

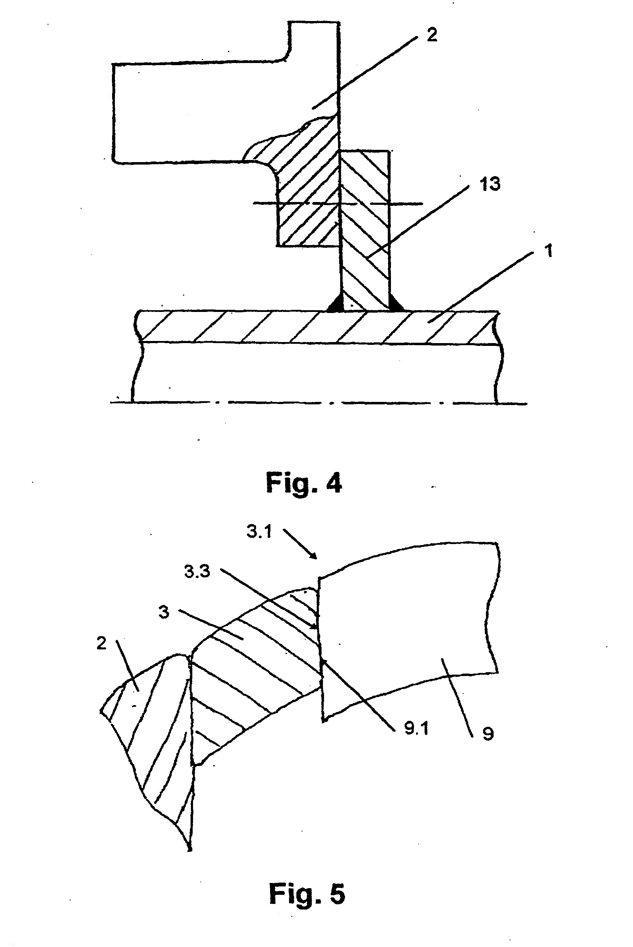

Fig. 4 zeigt eine Ausführung, bei der der Träger 2 an einem an der Achse 1 angeschweißten Tragflansch 13 lösbar befestigt ist. Zur Befestigung können beispielsweise Schrauben dienen.

Mit der erfindungsgemäßen Ausgestaltung ist der reaktionsseitig freie Zugang zur Bremsscheibe 7 mit wenigen Arbeitsschritten realisierbar. Trotzdem ist eine gleichmäßige Führung des Gleitsattels 3 und der Bremsbacken 8, 9 bezüglich des Trägers 2 gewährleistet. Die Demontage erfolgt folgendermaßen: Nachdem in herkömmlicher Weise die Radfelge, die Radnabe etc. von der Achse 1 entfernt worden sind, werden zum Ausbau der Bremsscheibe 7 zunächst die Führungsbolzen 4 von dem Träger 2 gelöst. Danach kann der Gleitsattel 3 mit den daran durch die Haltemittel 10 befestigten Bremsbacken 8, 9 in einem einzigen Arbeitsschritt über den Durchmesser D der Bremsscheibe 7 radial von dem Träger 2 abgehoben werden. Ist zusätzlich eine Kopplung nach Fig. 3 vorhanden, muß der Gleitsattel 3 lediglich zunächst in Axialrichtung verschoben werden, bis die Verriegelung in Radialrichtung aufgehoben ist. Um die Axialverschiebung des Gleitsattels 3 zu ermöglichen, muß im Inneren des Gleitsattels 3 entsprechend Platz geschaffen werden. Dazu können beispielsweise die Bremsbacken (in Axialrichtung) auseinandergefahren werden. Danach erfolgt das Abnehmen von dem Träger 2 wie vorher beschrieben. Durch den jetzt frei zugänglichen Öffnungsbereich zwischen den Stützflächen 12 kann die Bremsscheibe 7 ohne weiteren Teileabbau von der Achse abgezogen werden.

Die in der vorstehenden Beschreibung, den Ansprüchen sowie der Zeichnung offenbarten Merkmale der Erfindung können sowohl einzeln als auch in beliebigen Kombinationen zur Verwirklichung der Erfindung in ihren verschiedenen Ausführungsformen wesentlich sein.

## Patentansprüche

1. Gleitsattel-Scheibenbremse für ein Landfahrzeug, mit
einer Bremsscheibe (7),
einem Gleitsattel (3),
einem Träger (2),
einer betätigungsseitigen Bremsbacke (8) und
einer reaktionsseitigen Bremsbacke (9), wobei
der Träger (2) unbeweglich bezüglich einer Achse (1) des Landfahrzeugs gehalten ist,
die Bremsscheibe (7) drehbar bezüglich der Achse (1) gehalten ist und zur Montage/Demontage bezüglich des Trägers (2) in Richtung der Achse (1) verschieblich ist,
der Gleitsattel (3) zwei Schenkel (5, 6) hat, nämlich einen (5), der auf der Betätigungsseite der Bremsscheibe (7) liegt, und einen (6), der auf der Reaktionsseite der Bremsscheibe (7) liegt,
der Gleitsattel (3) einen in Radialrichtüng offenen Ausschnitt (3.1) zur Aufnahme der reaktionsseitigen und der betätigungsseitigen Bremsbacke (8, 9) aufweist,
der Träger (2) sich axial von der Betätigungsseite zur Reaktionsseite der Bremsscheibe (7) erstreckt,
der Träger (2) auf der Reaktionsseite eine lichte Weite hat, die derart bemessen ist, daß die Bremsscheibe (7) beim Axialverschieben zur Montage/Demontage hindurchpaßt,
der Träger (2) Führungen (4) aufweist, auf denen der Gleitsattel (3) gleitend geführt ist, und
die reaktionsseitige Bremsbacke (9) in Radialrichtung an dem Gleitsattel (3) festgelegt ist und zusammen mit dem Gleitsattel (3) in Radialrichtung über den Außenumfang der Bremsscheibe (7) hinaus von dem Träger (2) abgehoben werden kann,
**dadurch gekennzeichnet, daß**
sich die betätigungsseitige Bremsbacke (8) gleitend an dritten Stützflächen (11) an dem Träger (2) abstützt.

2. Gleitsattel-Scheibenbremse nach Anspruch 1, **dadurch gekennzeichnet, daß**
der Träger (2) zwei Arme aufweist, die sich axial von der Betätigungsseite zur Reaktionsseite erstrecken und auf ihrer bremsscheibenzugewandten Seite erste Stützflächen (12) zur gleitenden Führung und Abstützung des Gleitsattels (3) aufweisen, und
der Gleitsattel (3) mit seiner Außenkontur (3.2) an den Stützflächen (12) anliegt.

3. Gleitsattel-Scheibenbremse nach Anspruch 1 oder 2, **dadurch gekennzeichnet, daß** sich die reaktionsseitige Bremsbacke (9) in Tangentialrichtung an dem Gleitsattel (3) abstützt.

4. Gleitsattel-Scheibenbremse nach einem der vorangehenden Ansprüche, **dadurch gekennzeichnet, daß** Begrenzungen (3.3) des Ausschnitts (3.1) als zweite Stützflächen für die reaktionsseitige Bremsbacke (9) dienen.

5. Gleitsattel-Scheibenbremse nach einem der vorangehenden Ansprüche, **dadurch gekennzeichnet, daß** eine Halteeinrichtung (10) die betätigungsseitige Bremsbacke (8) und die reaktionsseitige Bremsbacke (9) in Radialrichtung an dem Gleitsattel (3) festlegt.

6. Gleitsattel-Scheibenbremse nach einem der vorangehenden Ansprüche, **gekennzeichnet durch** einen Ansatz (12.1) an dem Gleitsattel (3) oder an dem Träger (2), der eine entsprechende Kontur (3.2) an dem Träger (2) bzw. an dem Gleitsattel (3) hintergreift und **dadurch** den Gleitsattel (3) in Radialrichtung an dem Träger verriegelt, wobei die axiale Länge des Ansatzes (12.1) oder der Kontur (3.2) derart ist, daß der Gleitsattel (3) **durch** Axialverschiebung entriegelt werden kann.

7. Gleitsattel-Scheibenbremse nach Anspruch 6, **dadurch gekennzeichnet, daß** die Führungen (12) an dem Ansatz (12.1) oder der Kontur angeordnet sind.

8. Gleitsattel-Scheibenbremse nach einem der vorangehenden Ansprüche, **dadurch gekennzeichnet, daß** der Träger (2) unlösbar mit der Achse (1) verbunden ist.

9. Gleitsattel-Scheibenbremse nach einem der Ansprüche 1 bis 7, **dadurch gekennzeichnet, daß** der Träger (2) lösbar an der Achse (1) angebracht ist.

## Claims

1. Sliding calliper disc brake for a road vehicle, comprising a brake disc (7), a sliding calliper (3), a carrier (2), an actuating-side brake shoe (8) and a reaction-side brake shoe (9), in which the carrier (2) is fixed relative to an axle (1) of the road vehicle, the brake disc (7) is rotatable relative to the axle (1) and is displaceable relative to the carrier (2) in the direction of the axle (1) for mounting/removal, the sliding calliper (3) has two legs (5, 6), one (5) situated on the actuating side of the brake disc (7) and one (6) situated on the reaction side of the brake disc (7), the sliding calliper (3) has a cut-out (3.1) open in the radial direction for receiving the reaction-side and actuating-side brake shoes (8, 9), the carrier (2) extends axially from the actuating side to the reaction side of the brake disc (7), the carrier (2) has a clear width on the reaction side such that the brake disc (7) passes through when it is axially displaced for mounting/removal, the carrier (2) has guides (4) on which the sliding calliper (3) is slidably guided and the reaction-side brake shoe (9) is fixed to the sliding calliper (3) in the radial direction and can be lifted from the carrier (2) together with the sliding calliper (3) in the radial direction beyond the outer circumference of the brake disc (7), **characterised in that** the actuating-side brake shoe (8) is slidably supported on third supporting surfaces (11) on the carrier (2).

2. Sliding calliper disc brake according to claim 1, **characterised in that** the carrier (2) has two arms extending axially from the actuating side to the reaction side and provided on their sides directed towards the brake disc with first supporting surfaces (12) for the slidable guiding and support of the sliding calliper (3) and the sliding calliper (3) bears against the supporting surfaces (12) by means of its outer contour (3.2).

3. Sliding calliper disc brake according to claim 1 or claim 2, **characterised in that** the reaction-side brake shoe (9) is supported on the sliding calliper (3) in the tangential direction.

4. Sliding calliper disc brake according to one of the preceding claims, **characterised in that** sides (3.3) of the cut-out (3.1) serve as second supporting surfaces for the reaction-side brake shoe (9).

5. Sliding calliper disc brake according to one of the preceding claims, **characterised in that** a holding device (10) fixes the actuating-side brake shoe (8) and the reaction-side brake shoe (9) to the sliding calliper (3) in the radial direction.

6. Sliding calliper disc brake according to one of the preceding claims, **characterised by** a step (12.1) on the sliding calliper (3) or on the carrier (2) which engages behind a corresponding contour (3.2) on the carrier (2) or on the sliding calliper (3) and thus locks the sliding calliper (3) to the carrier in the radial direction, the axial length of the step (12.1) or of the contour (3.2) being such that the sliding calliper (3) can be released by means of axial displacement.

7. Sliding calliper disc brake according to claim 6, **characterised in that** the guides (12) are arranged on the step (12.1) or on the contour.

8. Sliding calliper disc brake according to one of the preceding claims, **characterised in that** the carrier (2) is permanently connected to the axle (1).

9. Sliding calliper disc brake according to one of claims 1 to 7, **characterised in that** the carrier (2) is removably mounted on the axle (1).

## Revendications

1. Frein à disque à étrier flottant destiné à un véhicule routier, comportant:
un disque de frein (7),
un étrier flottant (3),
un support (2),
une mâchoire de frein (8) du côté de l'actionnement, et
une mâchoire de frein (9) du côté de la réaction, dans lequel:
le support (2) est retenu en fixe par rapport à un axe (1) du véhicule routier,
le disque de frein (7) est retenu en rotation par rapport à l'axe (1), et peut être déplacé en direction de l'axe (1) pour le montage / démontage du support (2),
l'étrier flottant (3) comporte deux branches (5, 6), à savoir une branche (5) qui est située du côté de l'actionnement du disque de frein (7), et une branche (6) qui est située du côté de la réaction du disque de frein (7),
l'étrier flottant (3) comporte une découpe (3.1) ouverte dans la direction radiale, destinée à la réception de la mâchoire de frein (8, 9) située du côté de la réaction et celle située du côté de l'actionnement,
le support (2) s'étend axialement du côté de l'actionnement vers le côté de la réaction du disque de frein (7),
le support (2) présente du côté de la réaction une largeur utile qui est dimensionnée de telle sorte que, lors de la translation axiale pour le montage / démontage, le disque de frein (7) passe à travers,
le support (2) comporte des guidages (4), sur lesquels l'étrier flottant (3) est guidé de façon flottante, et
la mâchoire de frein (9) située du côté de la réaction est fixée sur l'étrier flottant (3) dans la direction radiale, et peut être retirée du support (2) avec l'étrier flottant (3) dans la direction radiale en étant soulevée au-dessus de la périphérie extérieure du disque de frein (7),
**caractérisé en ce que** :
la mâchoire de frein (8) située du côté de l'actionnement prend appui de manière flottante sur des troisièmes surfaces d'appui (11) du support (2).

2. Frein à disque à étrier flottant selon la revendication 1, **caractérisé en ce que**:
le support (2) comporte deux bras qui s'étendent axialement du côté de l'actionnement vers le côté de la réaction, et qui comportent de leur côté orienté vers le disque de frein des premières surfaces d'appui (12) destinées au guidage et à l'appui flottants de l'étrier flottant (3), et
**en ce que** l'étrier flottant (3) prend appui sur les surfaces d'appui (12) par son contour extérieur (3.2).

3. Frein à disque à étrier flottant selon la revendication 1 ou 2, **caractérisé en ce que** la mâchoire de frein (9) située du côté de la réaction prend appui sur l'étrier flottant (3) dans la direction tangentielle.

4. Frein à disque à étrier flottant selon l'une quelconque des revendications précédentes, **caractérisé en ce que** des délimitations (3.3) de la découpe (3.1) servent de secondes surfaces d'appui pour la mâchoire de frein (9) située du côté de la réaction.

5. Frein à disque à étrier flottant selon l'une quelconque des revendications précédentes, **caractérisé en ce qu'**un dispositif de retenue (10) immobilise dans la direction radiale la mâchoire de frein (8) située du côté de l'actionnement et la mâchoire de frein (9) située du côté de la réaction sur l'étrier flottant (3).

6. Frein à disque à étrier flottant selon l'une quelconque des revendications précédentes, **caractérisé par** un épaulement (12.1) prévu sur l'étrier flottant (3) ou sur le support (2), qui passe derrière un contour (3.2) correspondant du support (2) ou de l'étrier flottant (3), et qui verrouille de ce fait l'étrier flottant (3) sur le support dans la direction radiale, la longueur axiale de l'épaulement (12.1) ou du contour (3.2) étant telle que l'étrier flottant (3) puisse être déverrouillé par une translation axiale.

7. Frein à disque à étrier flottant selon la revendication 6, **caractérisé en ce que** les guidages (12) sont disposés sur l'épaulement (12.1) ou sur le contour.

8. Frein à disque à étrier flottant selon l'une quelconque des revendications précédentes, **caractérisé en ce que** le support (2) est relié de façon inamovible à l'axe (1).

9. Frein à disque à étrier flottant selon l'une quelconque des revendications 1 à 7, **caractérisé en ce que** le support (2) est fixé de façon amovible sur l'axe (1).
